Europäisches Patentamt

European Patent Office

Office européen des brevets

(19)

(11) Numéro de publication : **0 322 299 B1**

(12)  FASCICULE DE BREVET EUROPEEN

(45) Date de publication du fascicule du brevet :
20.03.91 Bulletin 91/12

(51) Int. Cl.⁵ : **B62D 43/04**

(21) Numéro de dépôt : **88403243.4**

(22) Date de dépôt : **19.12.88**

(54) Dispositif de rangement d'une roue de secours de véhicule automobile.

(30) Priorité : 23.12.87 FR 8718070

(43) Date de publication de la demande :
28.06.89 Bulletin 89/26

(45) Mention de la délivrance du brevet :
20.03.91 Bulletin 91/12

(84) Etats contractants désignés :
DE GB IT

(56) Documents cités :
EP-A- 0 201 414
US-A- 2 584 233
US-A- 4 418 852

(73) Titulaire : AUTOMOBILES PEUGEOT
75, avenue de la Grande Armée
F-75116 Paris (FR)
Titulaire : AUTOMOBILES CITROEN
62 Boulevard Victor-Hugo
F-92200 Neuilly-sur-Seine (FR)

(72) Inventeur : Delaunay, Monique
12, Boulevard Descartes
F-78180 Montigny Les Bretonneux (FR)

(74) Mandataire : Kohn, Philippe et al
c/o CABINET LAVOIX 2, place d'Estienne
d'Orves
F-75441 Paris Cédex 09 (FR)

## Description

La présente invention a pour objet un dispositif de rangement d'une roue de secours de véhicule automobile.

On a déjà proposé de nombreux dispositifs de rangement du type comportant un panier relié à la face inférieure du plancher du véhicule, d'un côté par des moyens d'articulation autour d'un axe horizontal, et de l'autre côté par des moyens d'accrochage disposés à proximité de l'ouverture latérale du panier par laquelle on peut introduire la roue de secours dans celui-ci.

Ce type de dispositif de rangement d'une roue de secours qui est décrit et représenté notamment dans le document EP-A-201.414 est particulièrement avantageux en ce qu'il permet de dégager entièrement le volume du coffre du véhicule sous le plancher duquel est généralement aménagé le dispositif de rangement.

On constate toutefois que la manipulation de la roue de secours, en vue de l'introduire dans le panier ou en vue de l'en extraire, est souvent mal aisée et nécessite de la part du conducteur des efforts importants qui doivent être accomplis dans une position peu confortable.

Le document US-A-4.418.852 décrit et représente un dispositif de rangement d'une roue de secours du type comportant un panier fixe sous le plancher d'un véhicule dont le fond sur lequel repose la roue comporte des moyens de roulement qui coopèrent avec la roue pour en faciliter l'introduction dans le panier.

L'invention a pour but de proposer un dispositif de rangement de roue de secours dont les différentes caractéristiques permettent de faciliter l'utilisation d'un dispositif à panier basculant modifié selon les enseignements du document US-A-4.418.852.

Dans ce but l'invention propose un dispositif de rangement caractérisé en ce que le fond du panier sur lequel repose la roue comporte des moyens de roulement qui coopèrent avec la roue pour en faciliter l'introduction dans le panier, en ce que le panier comporte des moyens de butée pour limiter l'angle maximal de basculement du panier, et en ce que le panier comporte un organe de fermeture partiel de l'ouverture latérale dont la base est montée pivotante sur le panier.

Grâce à cet agencement, on comprend aisément que le conducteur n'a plus qu'à positionner le bord avant de la roue sur les moyens de roulement puis à introduire la roue dans le panier en la faisant rouler sur le fond de celui-ci puis à attraper l'organe de fermeture partielle pour maintenir la roue dans le panier et provoquer la rotation du panier autour de son axe horizontal d'articulation, le conducteur n'ayant plus alors qu'à raccrocher la partie supérieure de l'organe de fermeture dans le mécanisme d'accrochage.

Les moyens de butée permettent d'éviter que le panier ne repose sur le sol dans sa position ouverte. Grâce à cet agencement selon lequel le bord du panier reste dans une zone intermédiaire entre le sol et la face inférieure du plancher du véhicule, il est particulièrement aisé pour le conducteur d'amener la roue en appui sur le bord inférieur de l'ouverture équipée du tube de roulement, puis d'en provoquer l'introduction dans le panier.

Selon une autre caractéristique de l'invention, le panier comprend une armature en fil métallique plié comportant au moins un premier brin transversal, parallèle à l'axe d'articulation du panier, situé dans le fond du panier, et sur lequel un tube de roulement est monté tournant. Le bras transversal est avantageusement agencé au voisinage du bord inférieur de l'ouverture du panier.

Grâce à cette conception en fil plié il est possible de réaliser un dispositif de rangement dont le coût soit réduit et dans lequel l'incorporation des moyens de roulement s'effectue lors de l'opération de pliage et de soudage de l'armature.

L'utilisation d'un organe de fermeture, faisant partie intégrante du dispositif de rangement, permet de prévoir l'ouverture latérale d'introduction de la roue qui soit de grandes dimensions c'est-à-dire dont la section correspond au moins à la section diamétrale maximale de la roue que l'on désire y introduire, et ceci afin de limiter les mouvements du conducteur à une simple mise en position puis une poussée rectiligne de la roue à l'intérieur du panier.

L'organe de fermeture partielle peut être réalisé également en fil métallique plié en forme d'une boucle dont une base rectiligne constitue l'axe de pivotement monté pivotant sur l'armature du panier, et dont la partie supérieure coopère avec le mécanisme d'accrochage.

L'armature peut comporter deux brins latéraux dont deux extrémités libres font partie des moyens d'articulation du panier et dont les deux autres extrémités opposées sont reliées par le brin transversal, chaque brin latéral comportant, au voisinage de ladite autre extrémité, une portion coudée formant un palier pour l'axe de pivotement de l'organe de fermeture.

Afin d'améliorer la rigidité de la structure du panier ainsi que les conditions de roulement de la roue de secours sur le fond du panier, ce dernier peut comporter un second brin transversal, parallèle au premier brin transversal, sur lequel est monté tournant un tube de roulement.

Enfin, selon une disposition connue, la structure du panier peut comporter une doublure interne de protection latérale et inférieure de la roue.

D'autres caractéristiques et avantages de l'invention apparaîtront à la lecture de la description détaillée qui va suivre pour la compréhension de laquelle on se reportera aux dessins annexés dans lesquels :

— La figure 1 est une vue en perspective d'un mode de réalisation préféré de l'invention ;
– la figure 2 est une vue schématique transversale illustrant le dispositif de rangement selon l'invention en position ouverte.

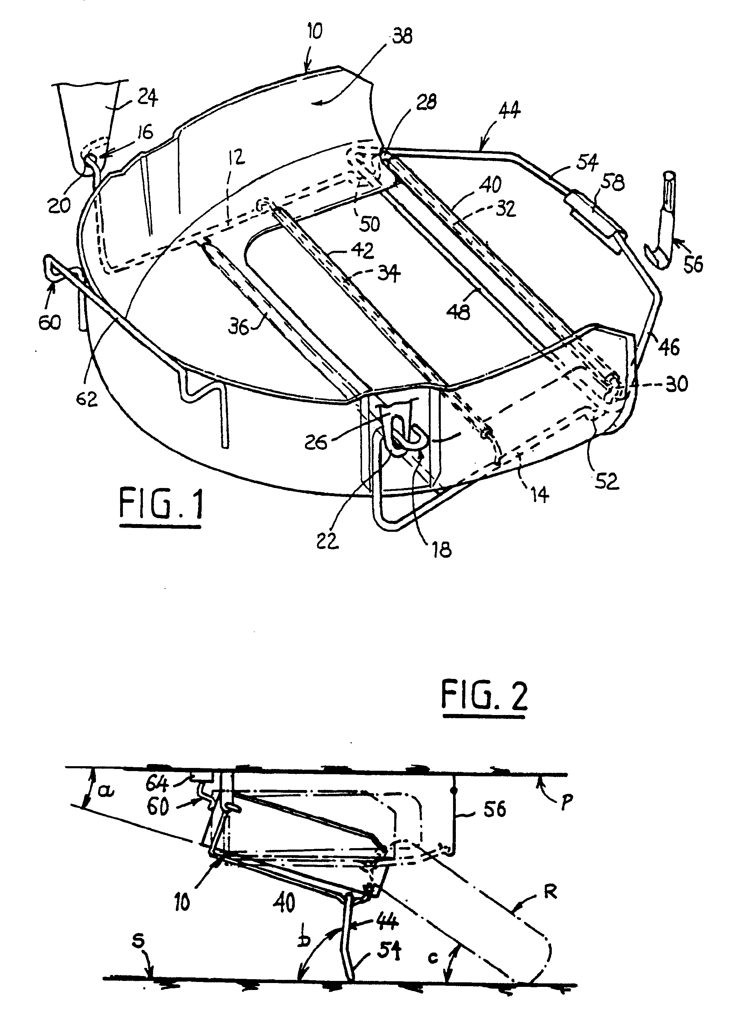

On a représenté à la figure 1 un dispositif de rangement pour une roue de secours (non représentée) constitué pour l'essentiel par un panier 10.

Le panier 10 comporte une armature en fil métallique plié et soudé. L'armature comporte pour l'essentiel deux brins latéraux 12 et 14 s'étendant parallèlement à l'axe longitudinal du véhicule sur lequel est monté le panier de rangement. Deux premières extrémités libres 16 et 18 des brins latéraux, 12 et 14 respectivement, se prolongent verticalement vers la partie supérieure du panier en deux parties recourbées en forme de crochet qui sont prévues pour être introduites dans deux trous 20 et 22 formés dans des pattes 24 et 26 s'étendant verticalement depuis la face inférieure du plancher P du véhicule.

Les deux extrémités 16 et 18 des brins latéraux 12 et 14 constituent un axe horizontal d'articulation du panier 10 sous le plancher du véhicule afin de permettre le basculement de celui-ci.

Comme on peut le constater à la figure 1, les deux brins latéraux 12 et 14 sont les deux parties extrêmes d'une seule portion de fil métallique plié et leurs extrémités 28 et 30 sont reliées entre elles par une partie médiane 32 constituant un premier brin transversal de la structure du panier.

La structure en fil plié formant l'armature du panier peut être renforcée par un second brin transversal 34, parallèle au premier brin transversal 32, dont les extrémités sont soudées sur les brins latéraux 12 et 14, ainsi qu'au moyen d'un troisième brin 36.

Afin de protéger la roue de secours reçue dans le panier 10, ce dernier comporte une doublure interne de protection latérale et inférieure 38 réalisée par exemple en tôle et soudée sur l'armature en fil.

Comme on peut le remarquer à la figure 1, la conception de l'armature en fil ainsi que la forme et la découpe de la doublure interne 38 permettent de délimiter une ouverture latérale du panier, s'étendant vers l'arrière du véhicule, de grandes dimensions.

Le bord inférieur de l'ouverture d'introduction de la roue est délimité par le brin transversal 32 sur lequel est monté tournant un tube en matière plastique 40 de manière à constituer un rouleau.

De la même façon le brin transversal médian 34 peut également être équipé d'un tube formant rouleau 42.

On comprend aisément que l'agencement, dans le plan formant le fond du panier, de deux rouleaux 40 et 42 facilite grandement les mouvements de translation de la roue de secours à l'intérieur du panier 10, notamment lors de l'introduction de celle-ci par le conducteur.

Afin de maintenir la roue de secours dans le panier 10, ce dernier comporte un organe de fermeture partielle 44.

L'organe de fermeture 44 est réalisé par un fil métallique plié de manière à constituer une boucle fermée 46 dont la base est délimitée par un brin horizontal rectiligne 48.

Conformément à l'invention, le brin de base 48 est monté pivotant dans deux portions coudées 50 et 52 des brins latéraux, 12 et 14 respectivement, formées au voisinage des extrémités 28 et 30.

La coopération du brin de base 48 avec les portions coudées en forme de paliers 50 et 52 constitue les moyens de pivotement de l'organe de fermeture partielle 44 par rapport à la structure du panier 10.

Le brin 54 formant la partie supérieure de la boucle 46 est prévu pour coopérer avec au moins une patte coudée 56 faisant partie du mécanisme d'accrochage, non représenté, du panier de rangement en position fermée sous le plancher du véhicule. Le brin supérieur 54 de la boucle 46 est également équipé d'une palette en tôle pliée soudée 58 facilitant la manoeuvre du dispositif de rangement par le conducteur.

La partie du panier 10, opposée à l'organe de fermeture partielle 44, comporte des moyens de butée 60 qui sont prévus pour coopérer avec des surfaces de butée 64, voir figure 2, pour limiter l'angle maximal a de basculement du panier par rapport au plancher du véhicule.

Dans le mode de réalisation représenté à la figure 1, les moyens de butée 60 sont constitués par une barre transversale horizontale 62, soudée sur la doublure 38.

Comme on peut le constater à la figure 2, lorsque le dispositif de rangement est dans sa position ouverte, l'organe de fermeture partielle 44 peut pivoter entièrement autour de son axe de pivotement de manière ce que son bord supérieur 54 vienne en appui sur le sol S.

Enfin les dimensions respectives des divers composants sont choisies de manière que, dans la position représentée à la figure 2, la roue R représentée en silhouette, lorsqu'elle est en en appui d'une part sur le sol S et d'autre part sur le premier tube de roulement 40, forme avec le sol un angle "c" sensiblement égal à l'angle "a".

Lorsque le conducteur désire utiliser sa roue de secours, il agit sur les moyens de verrouillage du mécanisme de manière à libérer la partie supérieure 54 de l'organe de fermeture partielle 44 de la patte d'accrochage 56 en agissant sur la palette 58.

Le conducteur laisse ensuite basculer le panier 10 autour de son articulation horizontale 16-18 en le maintenant par la palette 58 jusqu'à ce que les moyens de butée 60 viennent en appui sur les surfaces de butée 64. Il appuie ensuite sur l'organe de fermeture 44 qui vient prendre appui sur le sol de façon à permettre l'extraction de la roue de secours qui sort immédiatement du panier par roulement sur les tubes de roulement 40 et 42.

Après avoir procédé au changement de la roue crevée, le conducteur amène cette dernière dans la position de la roue R représentée à la figure 2. Pour l'introduire dans le panier 10 il lui suffit de la pousser vers l'avant du véhicule en la faisant rouler d'abord sur le premier tube de roulement 40 puis dans le fond du panier sur le second tube de roulement 42 jusqu'à ce qu'elle soit entièrement introduite dans le panier.

Tout en maintenant la roue crevée en position enfoncée à l'aide d'une main, le conducteur attrape l'organe de fermeture partielle 44 avec son autre main pour maintenir la roue crevée dans le panier et provoquer la rotation, contre le sens horaire en considérant la figure 2, du panier 10 autour de son axe horizontal d'articulation. Lorsque le panier est à nouveau dans sa position sensiblement horizontale et parallèle au plancher P du véhicule, le conducteur n'a plus qu'à raccrocher la partie supérieure 54 de l'organe de fermeture 44 dans le mécanisme d'accrochage 56.

## Revendications

1. Dispositif de rangement d'une roue de secours comportant un panier (10) relié à la face inférieure du plancher (P) d'un véhicule automobile, d'un côté par des moyens d'articulation (16-18) autour d'un axe horizontal, et de l'autre côté par des moyens d'accrochage (56) disposés à proximité de l'ouverture latérale du panier, caractérisé en ce que le fond du panier sur lequel repose la roue comporte des moyens de roulement (40, 42) qui coopèrent avec la roue pour en faciliter l'introduction dans le panier, en ce que le panier (10) comporte des moyens de butée (60) pour limiter l'angle maximal de basculement (a) du panier, et en ce que le panier (10) comporte un organe de fermeture partielle (44) de l'ouverture latérale, dont la base est montée pivotante sur le panier (10).

2. Dispositif de rangement selon la revendication 1, caractérisé en ce que l'organe de fermeture (44) est réalisé en fil métallique plié en forme d'une boucle dont une base rectiligne constitue l'axe de pivotement monté pivotant sur l'armature, et dont la partie supérieure (54) coopère avec le mécanisme d'accrochage (56).

3. Dispositif de rangement selon l'une des revendications 1 ou 2, caractérisé en ce que le panier (10) comprend une armature en fil métallique plié comportant au moins un premier brin transversal (32) parallèle à l'axe d'articulation du panier, situé dans le fond du panier, et sur lequel un tube de roulement (40) est monté tournant.

4. Dispositif de rangement selon la revendication 3, caractérisé en ce que le brin transversal (32) est agencé au voisinage du bord inférieur de l'ouverture du panier.

5. Dispositif de rangement selon l'une des revendications 3 ou 4 prise en combinaison avec la revendication 2, caractérisé en ce que l'armature comporte deux brins latéraux (12, 14) dont deux extrémités libres (16, 18) font partie des moyens d'articulation du panier, et dont les deux autres extrémités opposées (28, 30) sont reliées par le brin transversal (32), chaque brin latéral comportant, au voisinage de ladite autre extrémité, une partie coudée (50, 52) formant un palier pour l'axe de pivotement de l'organe de fermeture (44).

6. Dispositif de rangement selon l'une quelconque des revendications 3 à 5, caractérisé en ce qu'il comporte un second brin transversal (34) parallèle au premier brin transversal (32), sur lequel est monté tournant un tube de roulement (42).

7. Dispositif de rangement selon l'une quelconque des revendications précédentes, caractérisé en ce que lesdits moyens de butée (60) coopèrent avec des surfaces de butée (64) formées en vis-à-vis sur le plancher (P) du véhicule.

8. Dispositif selon l'une quelconque des revendications 3 à 6, caractérisé en ce que l'armature comporte une doublure interne de protection latérale et inférieure (38) de la roue.

## Ansprüche

1. Halterung für ein Reserverad eines Kraftfahrzeugs, mit einer Wanne (10), die mit der unteren Fläche des Bodens (P) auf einer Seite durch eine Schwenkeinrichtung (16-18) zur Schwenkung um eine waagerechte Achse und an der anderen Seite durch eine Einrichtung (56) zum Anhängen, die in der Nähe einer seitlichen Öffnung der Wanne angeordnet ist, verbunden ist, dadurch **gekennzeichnet**, daß der Boden der Wanne, auf dem das Rad liegt, eine Rolleneinrichtung (40, 42) aufweist, die mit dem Rad zur Erleichterung des Einführens in die Wanne zusammenwirkt, daß die Wanne (10) eine Anschlageinrichtung (60) zur Begrenzung des maximalen Schwenkwinkels (a) der Wanne aufweist, und daß die Wanne (10) ein Verschlußorgan (44) zum teilweisen Verschließen der seitlichen Öffnung aufweist, dessen Basis schwenkbar an der Wanne (10) angebracht ist.

2. Halterung nach Anspruch 1, dadurch **gekennzeichnet**, daß das Verschlußorgan (44) gebildet ist durch einen Metalldraht, der in der Form einer Schleife gebogen ist, dessen geradlinige Basis die in einer Aufnahme schwenkbar befestigte Schwenkachse bildet, und dessen oberer Teil (54) mit der Aufhängungseinrichtung (56) zusammenarbeitet.

3. Halterung nach einem der Ansprüche 1 oder 2, dadurch **gekennzeichnet**, daß die Wanne (10) eine Armatur aus gebogenem Metalldraht aufweist, die wenigstens einen ersten quergerichteten Abschnitt (32) umfaßt, der parallel zur Schwenkachse der Wanne verläuft und am Boden der Wanne angeordnet ist, und daß ein Rollenrohr (40) drehbar auf dem Abschnitt angeordnet ist.

4. Halterung nach Anspruch 3, dadurch **gekennzeichnet,** daß der waagerechte Abschnitt (32) in der Nähe des unteren Randes der Öffnung der Wanne angeordnet ist.

5. Halterung nach einem der Ansprüche 3 oder 4 in Kombination mit Anspruch 2, dadurch **gekennzeichnet,** daß die Armatur zwei seitliche Abschnitte (12, 14) umfaßt, deren beiden freien Enden (16, 18) Teile der Schwenkeinrichtung der Wanne bilden und deren beiden anderen gegenüberliegenden Enden (28, 30) mit dem quergerichteten Abschnitt (32) verbunden sind, und daß jeder seitliche Abschnitt in der Nähe des anderen Endes eine gebogene Partie (50, 52) umfaßt, die ein Lager für die Schwenkachse des Verschlußorgans (44) bildet.

6. Halterung nach einem der Ansprüche 3 bis 5, dadurch **gekennzeichnet,** daß sie einen zweiten quergerichteten Abschnitt (34) parallel zu dem ersten quergerichteten Abschnitt (32) umfaßt, auf dem ein Rollenrohr (42) drehbar angeordnet ist.

7. Halterung nach einem der vorhergehenden Ansprüche, dadurch **gekennzeichnet,** daß die Anschlageinrichtung (60) mit einer Anschlagfläche (64) zusammenwirkt, die gegenüberliegend auf dem Boden (P) des Fahrzeugs befestigt ist.

8. Halterung nach einem der Ansprüche 3 bis 6, dadurch **gekennzeichnet,** daß die Armatur eine innere, seitliche und untere Schutzauskleidung (38) für das Rad aufweist.

## Claims

1. A device for stowing a spare wheel, comprising a basket (10) connected to the lower face of the floor (P) of a motor vehicle, on the one side via means (16-18) of articulation around a horizontal axis, and on the other side by means (56) of attachment disposed adjacent the lateral opening of the basket, characterized in that the bottom of the basket on which the wheel rests comprises rolling means (40, 42) cooperating with the wheel to facilitate its introduction into the basket; the basket (10) comprises stop means (60) to limit the maximum angle of tilting (a) of the basket; and the basket (10) comprises a member (44) which serves for the partial closure of the lateral aperture and whose base is pivotably mounted on the basket (10).

2. A stowing device according to claim 1, characterized in that the closure member (44) is made from metal wire bent in the form of a loop one rectilinear base of which forms the pivoting axis pivotably mounted on the armature, its upper portion (54) cooperating with the attaching mechanism (56).

3. A stowing device according to one of claims 1 or 2, characterized in that the basket (10) comprises a bent metal wire armature comprising at least a first transverse portion (32) which is parallel with the axis of articulation of the basket and is located in the bottom thereof and on which a rolling tube (40) is rotatably mounted.

4. A stowing device according to claim 3, characterized in that the transverse portion (32) is provided in the vicinity of the lower edge of the basket opening.

5. A stowing device according to one of claims 3 or 4, taken in combination with claim 2, characterized in that the armature comprises two lateral portions (12, 14) whose two free ends (16, 18) form part of the articulation means for the basket and whose two other opposite ends (28, 30) are connected by the transverse portion (32), each lateral portion comprising in the vicinity of said other end a bent portion (50, 52) forming a bearing for the pivoting axis of the closure member (44).

6. A stowing device according to any of claims 3 to 5, characterized in that it comprises a second transverse portion (34) which is parallel with the first transverse portion (32) and on which a rolling tube (42) is rotatably mounted.

7. A stowing device according to any of the preceding claims, characterized in that said abutment means (60) cooperate with facing abutment surfaces (64) with which the floor (P) of the vehicle is formed.

8. A stowing device according to any of claims 3 to 6, characterized in that the armature comprises a lateral and lower internal protective lining (38) of the wheel.

FIG.1

FIG.2